(19) Europäisches Patentamt

European Patent Office

Office européen des brevets

(11) EP 1 209 871 A1

(12) EUROPEAN PATENT APPLICATION
published in accordance with Art. 158(3) EPC

(43) Date of publication:
29.05.2002 Bulletin 2002/22

(51) Int Cl.⁷: H04L 27/22, H04J 13/04, H04B 7/26

(21) Application number: 01943864.7

(22) Date of filing: 27.06.2001

(86) International application number:
PCT/JP01/05567

(87) International publication number:
WO 02/07403 (24.01.2002 Gazette 2002/04)

(84) Designated Contracting States:
AT BE CH CY DE DK ES FI FR GB GR IE IT LI LU MC NL PT SE TR
Designated Extension States:
AL LT LV MK RO SI

(30) Priority: 14.07.2000 JP 2000214434

(71) Applicant: MATSUSHITA ELECTRIC INDUSTRIAL CO., LTD.
Kadoma-shi, Osaka 571-8501 (JP)

(72) Inventor: MIYA, Kazuyuki
Asao-ku, Kawasaki-shi, Kanagawa 215-0021 (JP)

(74) Representative: Grünecker, August, Dipl.-Ing.
Patentanwälte
Grünecker, Kinkeldey, Stockmair & Partner
Maximilianstrasse 58
80538 München (DE)

(54) CHANNEL PRESUMING SYSTEM AND CHANNEL PRESUMING METHOD

(57) Frequency offset obtained by a frequency offset detecting circuit 2051 is output to a per-slot phase rotation correcting circuit 207 and per-symbol phase rotation correcting circuits 209 and 210. A maximum Doppler frequency (fD) obtained by an fD detecting circuit 2052 is output to a weight factor calculating circuit 208. The per-symbol phase rotation correcting circuits 209 and 210 calculate a phase rotation correction value $\Delta\theta$symbol of each symbol based on an amount of phase rotation of a frequency offset and outputs the value to multipliers 206 and 201. The per-slot phase rotation correcting circuit 207 calculates a phase rotation correction value $\Delta\theta$slot of each slot based on the amount of phase rotation of the frequency offset and outputs the value to a weighted adding circuit 204. In the weight factor calculating circuit 208, a weight factor ($\alpha$) is calculated according to the detected fD value and is output to the weighted adding circuit 204.

FIG.3

**EP 1 209 871 A1**

**Description**

Technical Field

The present invention relates to a channel estimating apparatus and a channel estimating method used in a digital radio communication system, particularly in the CDMA (Code Division Multiple Access) system.

Background Art

In a radio communication, a base station and a communication terminal respectively have a separate clock generator. Generally, while the base station has a highly accurate (0.1ppm or less) oscillator, the communication terminal has an oscillator with an accuracy of about several ppm from the point of cost, size and electric power consumption, etc.

For example, in a communication terminal, when the carrier frequency is 2GHz, a frequency difference of 2kHz or more (at the accuracy of 1ppm is generated, under such situation, the reception becomes difficult. Accordingly, normal communication terminal has a function to control the differences in a clock frequency based on the received signals of the downlink, i.e., AFC (Automatic Frequency Control).

In case of W-CDMA (Wideband-Code Division Multiple Access) digital radio communication system, it is required by the 3GPP (3rd Generation Partnership Project) regulations that the accuracy should be within . 0.1ppm(at a carrier frequency of 2GHz which is equivalent to 200Hz).

However, even when the aforementioned regulations are met, channel estimation of the uplink received signal by base station is largely deteriorated due to phase rotation on account of frequency offset at the communication terminal (a frequency difference of a received signal caused by a correction error in AFC (AFC residual) which corrects differences in the clock frequency of the communication terminal, for example, about 48 degrees during a slot at a frequency offset of 200Hz) and a phase rotation by a high maximum Doppler frequency (fD) (for example, a phase rotation of about 57.6 degrees during a slot at 240Hz (equivalent to a velocity of about 120km/h ) due to a fading fluctuation, resulting in large deterioration of the reception characteristics.

Particularly, in a (WMSA: Weighted Multi-Symbol Averaging) method in which pilot symbols of a plurality of slots are weighted and averaged aiming at increasing channel estimation accuracy, a longer averaging time used for obtaining a channel estimation results in a larger influence. Therefore, it has been considered, conventionally, to control the averaging length (slot length and weight factor thereof) by means of the fD.

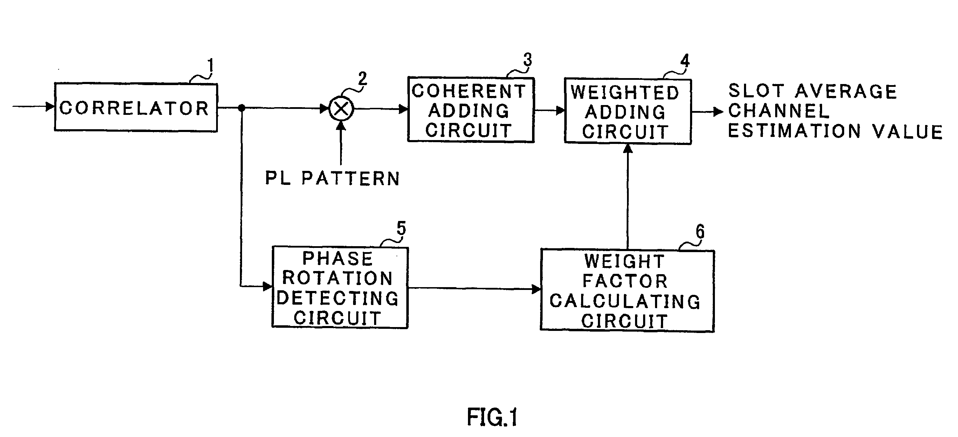

FIG. 1 is a block diagram showing a configuration of the conventional channel estimating apparatus. In correlator 1, a despreading processing is made on a received signal using a spreading code which has been used in a spread modulation processing at the communicating partner, and the signal is output to a multiplier 2. In the multiplier 2, a pilot portion (a part of a known signal) of the signal after despreading processing is multiplied by a pilot pattern (PL pattern), and the result of multiplication is output to a coherent adding circuit 3. In the coherent adding circuit 3, the result of multiplication is subjected to an in-phase addition to obtain a channel estimation value of respective slot units. The multiplication of the PL pattern and the in-phase addition serve as processing in a slot. The channel estimation value is then output to a weighted adding circuit 4. In the weighted adding circuit 4, a weighting addition is made on the channel estimation value of a slot unit over several slots. Accordingly, the weighting addition processing is an inter-slots processing.

On the other hand, the signal after despreading processing is output to a phase rotation detecting circuit 5. In the phase rotation detecting circuit 5, a phase rotation is detected by detecting the Doppler frequency (fD) from the despreading processed signal, and the amount of phase rotation is output to a weight factor calculating circuit 6. In the weight factor calculating circuit 6, a weight factor is calculated based on the amount of phase rotation and output to the weighted adding circuit 4. Thus, a channel estimation value is obtained from the channel estimation value which has been subjected to a weighting addition over a plurality of slots.

As described above, in the channel estimating apparatus that has the foregoing configuration, when calculating a channel estimation value in a certain slot, the channel estimation accuracy is increased if channel estimation values of the slots before and after the certain slot are used, which are supposed to have a high time correlation in fading fluctuation.

In the foregoing conventional channel estimating apparatus, so as not to receive the influence as the phase rotation due to the frequency offset or the fading fluctuation grows, the averaging time is shortened (the number of the slots prior to and after averaging is reduced). This means that the energy of the signal used for channel estimation is reduced in the amount equivalent to the shortened averaging time. When the signal energy which is used for channel estimation, is reduced the SINR (Signal to Interference and Noise Ratio) is inevitably deteriorated resulting in a deterioration of the channel estimation accuracy itself.

Disclosure of Invention

An object of the present invention is to provide a channel estimating apparatus and a channel estimating method which are capable of increasing the channel estimation accuracy without allowing the reception quality to be deteriorated.

Considering the fact that the phase rotation which requires a correction when carrying out a channel estimation depends on the frequency offset which varies at a relatively loose time in order of several seconds or more depending on external circumstances such as correction error in the AFC (AFC residual) thereby a fluctuation in clock frequency at a communication terminal is corrected, and on the fading fluctuation which frequently varies at an order of several milliseconds, the inventor of the present invention has reached to carry out his invention by discovering a fact that the channel estimation accuracy is increased without allowing the channel estimation accuracy to be deteriorated by performing a correction of the phase rotation and a correction (control) of the weight factor of the WMSA respectively responding to the frequency offset and the fading fluctuation, and by reflecting both of the corrections to the channel estimation.

Further, the inventor of the present invention reached to carry out his invention by discovering a fact that in the forgoing phase rotation correction, the channel estimation accuracy is increased through carrying out a channel estimation by correcting the phase rotation of a symbol unit (in-slot processing) prior to an in-phase addition of the despreading signal, and further, by correcting the phase rotation of a slot unit (inter-slots processing) after an in-phase addition.

That is to say, the main point of the invention is to increase the channel estimation accuracy without allowing the reception quality to be deteriorated by detecting a frequency offset component and a fading fluctuation component of the phase rotation separately from a known signal included in a received signal, and by carrying out a channel estimation using the frequency offset component and the fading fluctuation component of the phase rotation.

Brief Description of Drawings

FIG. 1 is a block diagram showing a configuration of a conventional channel estimating apparatus;

FIG. 2 is a block diagram showing a configuration of a base station equipped with a channel estimating apparatus according to a first embodiment of the present invention;

FIG. 3 is a block diagram showing a configuration of a channel estimating circuit of the base station shown in FIG. 2;

FIG. 4 is a block diagram showing a configuration of a communication terminal, which carries out radio communication with a base station equipped with the channel estimating apparatus according to the first embodiment of the present invention;

FIG. 5 is a block diagram showing a configuration of a channel estimating circuit of a base station equipped with a channel estimating apparatus according to a second embodiment of the present invention; and

FIG. 6 is a diagram showing a table illustrating modes in the base station equipped with the channel estimating apparatus according to the second embodiment of the present invention;

Best Mode for Carrying Out the Invention

Now, referring to the attached drawings, a detailed description will be made to the embodiments of the present invention.

(First embodiment)

In a first embodiment, a description of the case when carrying out channel estimation in which a phase rotation due to both frequency offset and fading fluctuation are separately calculated and then both phase rotations are corrected is given below.

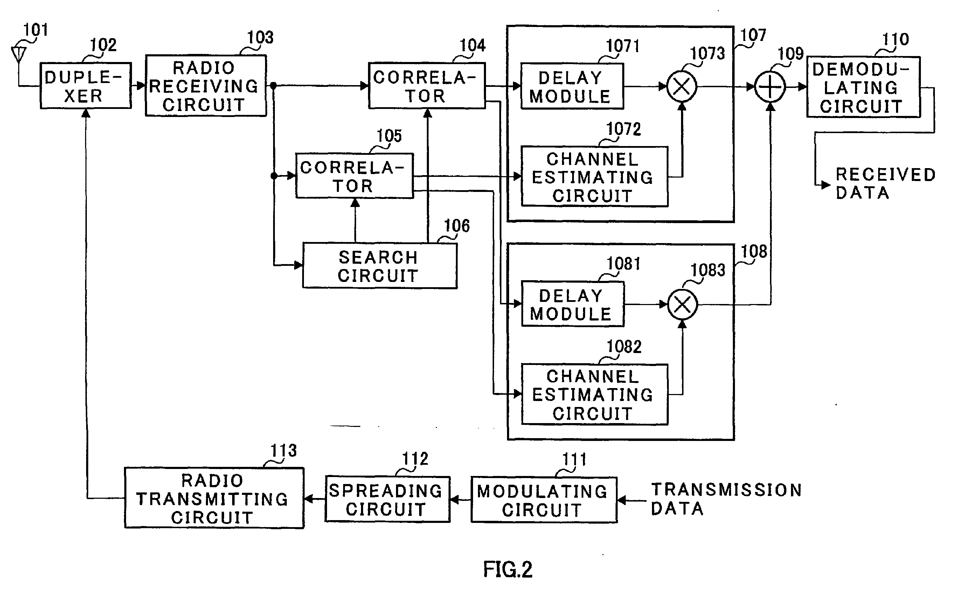

FIG. 2 is a block diagram showing a configuration of a base station equipped with a channel estimating apparatus according to the first embodiment of the present invention. In the base station shown in FIG. 2, a description will be made to the case where there are two paths for carrying out RAKE combining; it is also applicable to the case where there are three or more paths for carrying out RAKE combining. Moreover, in order to simplify the description of the base station shown in FIG. 2, only a sequence of one user is indicated.

A signal transmitted from a communication terminal as a communicating partner is received by a radio receiving circuit 103 through an antenna 101 and a duplexer 102. In the radio receiving circuit 103, a predetermined radio receiving processing (such as down convert, A/D conversion, etc.) is performed on the received signal, and the signal after the radio receiving processing is output to correlators 104 and 105. Additionally, the signal after the radio receiving processing is also output to a search circuit 106.

In the correlator 104, a despreading processing of a data portion (DPDCH: Dedicated Physical Data Channel) of the radio receiving processed signal using a spreading code which has been used in a spreading modulation processes in the communication terminal as a communicating partner is carried out, and the signal is then output to a delay module 1071 of a coherent detecting circuit 107 and to a delay module 1081 of a coherent detecting circuit 108. In the correlator 105, a despreading processing on a pilot portion (known signal) of the radio receiving processed signal using a spreading code which has been used in a spreading modulation processes in the communication terminal as the communicating partner is carried out, and the signal is output to a channel estimating circuit 1072 of the coherent detecting circuit 107 and to a channel estimating circuit 1082 of the coherent detecting circuit 108. In the search circuit 106, synchronization of the paths that carry out the despreading processing is acquired, and the timing information is output to both correlator 104 and correlator 105. The correlator 104 and correlator 105 carry out the despreading processing respectively based on the timing information received from the search circuit 106.

In the channel estimating circuit 1072 of the coherent detecting circuit 107, channel estimation is carried out using the pilot portion of the received signal and the channel estimation value is output to a multiplier 1073. In the multiplier 1073, the data portion of the received signal which has been timing compensated in the delay module 1071, is multiplied by the channel estimation value. Accordingly, a coherent detection is performed. The signal after the coherent detection process is output to a RAKE combiner 109.

In the channel estimating circuit 1082 of the coherent detecting circuit 108, channel estimation is carried out using the pilot portion of the received signal, and the channel estimation value is output to a multiplier 1083. In the multiplier 1083, the data portion of the received signal which has been timing compensated by the delay module 1081 is multiplied by the channel estimation value. Accordingly, a coherent detection is performed. The signal after the coherent detection process is output to the RAKE combiner 109.

In the RAKE combiner 109, the outputs from both coherent detecting circuits 107 and 108 are subjected to a RAKE combining and the RAKE combining subjected signal is output to a demodulating circuit 110. In the demodulating circuit 110, a demodulating processing of the RAKE combining subjected signal is executed so as to obtain a received data.

Transmission data is output to a spreading circuit 112 after being subjected to a modulating processing by a modulating circuit 111. In the spreading circuit 112, a spread modulation processing of the data being subjected to a modulating processing is performed using a predetermined spreading code, and the data after the spread modulation processing is output to a radio transmitting circuit 113. In the radio transmitting circuit 113, a predetermined radio transmitting processing (D/Aconversion, up-conversion) on the data after the spread modulation processing is carried out. The signal which has been subjected to the radio transmitting processing is then transmitted to the communication terminal as a communicating partner via the antenna 101 and duplexer 102.

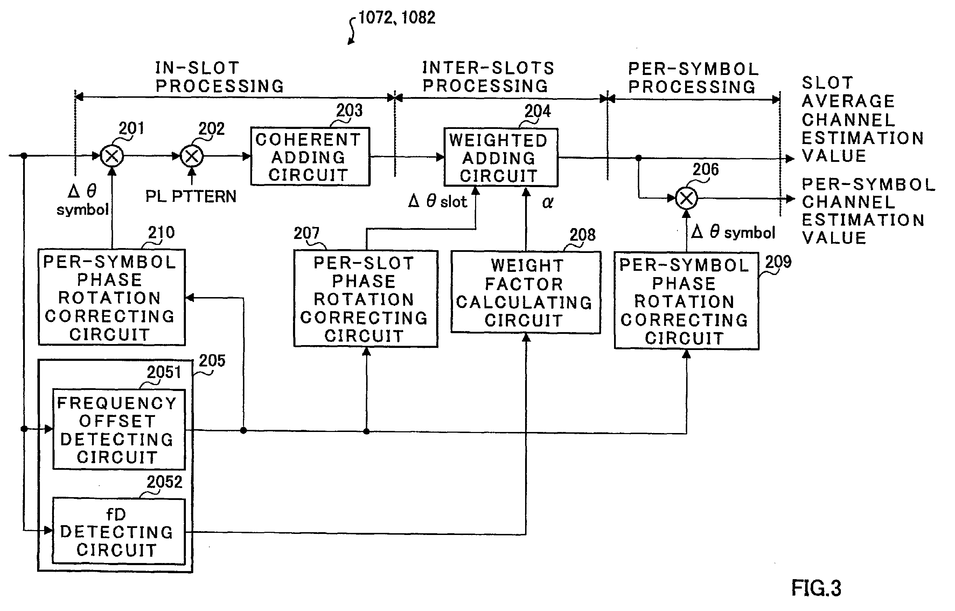

Next, a description of the configuration of the channel estimating circuits 1072 and 1082 of the coherent detecting circuits 107 and 108 is given. FIG. 3 is a block diagram showing a configuration of the channel estimating circuit of the base station shown in FIG. 2.

In the multiplier 201, the signal after despreading processing is multiplied by a phase rotation correction value of each symbol, and the signal after the multiplication is output to a multiplier 202. In the multiplier 202, the signal after despreading processing which has been subjected to the phase rotation correction of each symbol is multiplied by a pilot pattern (PL pattern) to adjust the signal to a same phase by eliminating a data modulation component due to PL pattern, and the result of multiplication is output to a coherent adding circuit 203.

In the coherent adding circuit 203, the result of multiplication is subjected to an in-phase addition to obtain a channel estimation value of each slot. The multiplication of the phase rotation correction value of each symbol, multiplication of the PL pattern and in-phase addition are the processing within a slot. The channel estimation value is then output to a weighted adding circuit 204.

On the other hand, the signal after despreading processing is output to a frequency offset detecting circuit 2051 and a fading fluctuation component detecting circuit (hereinafter, referred to as fD detecting circuit) 2052 of a phase rotation detecting circuit 205. In the frequency offset detecting circuit 2051, a frequency offset is obtained from the signal after despreading processing. The frequency offset component (the amount of phase rotation corresponding to the frequency offset) is output to a per-slot phase rotation correcting circuit 207 and per-symbol phase rotation correcting circuits 209 and 210. In the fD detecting circuit 2052, a maximum Doppler frequency (hereinafter, referred to as Doppler frequency or fD) is also obtained. In general, compared to the frequency offset, it is difficult to precisely measure the Doppler frequency in a fading fluctuation. Accordingly, in detecting the foregoing Doppler frequency, it is considered to obtain a Doppler frequency which is coarser in accuracy (for instance, several deca-Hz or a low/medium/ high speed detection, etc.) than the detection accuracy of the frequency offset. The fading fluctuation component (the amount of phase rotation corresponding to the fD) is output to a weight factor calculating circuit 208.

The per-symbol phase rotation correcting circuit 210 calculates a phase rotation correction value $\Delta\theta$ symbol

indicated for each symbol based on the amount of phase rotation of the frequency offset, and the phase rotation correction value Δθsymbol is output to the multiplier 201. The per-slot phase rotation correcting circuit 207 calculates a phase rotation correction value Δθslot indicated for each slot based on the amount of phase rotation of the frequency offset, and the phase rotation correction value Δθslot is output to the weighted adding circuit 204. The per-symbol phase rotation correcting circuit 209 calculates a phase rotation correction value Δθsymbol of each symbol based on the frequency offset component, and the phase rotation correction value Δθsymbol is output to a multiplier 206. Since the phase rotation correction value Δθsymbol which is output to the foregoing multiplier 201 and the phase rotation correction value Δθsymbol which is output to the foregoing multiplier 206 are both of the same value, it is possible to integrate them to one.

In the weight factor calculating circuit 208, a weight factor(α) is calculated in accordance with the detected fD value, and the weight factor α is output to the weighted adding circuit 204.

In the weighted adding circuit 204, a weighting addition on the channel estimation value of each slot over a plurality of slots using the phase rotation correction value Δθslot from the per-slot phase rotation correcting circuit 207 and the weight factor α from the weight factor calculating circuit 208 is executed. Accordingly, the weighting addition processing is a processing which is made among the slots.

Thus, based on the channel estimation value which has been subjected to a weight addition over a plurality of slots, a channel estimation value of each symbol or a channel estimation value of an average of slots is obtained. In such case and depending on the necessity, as channel estimation value, either a channel estimation value of an average of slots which is output from the weighted adding circuit 204 is used, or a channel estimation value of each symbol obtained by multiplying the channel estimation value of an average of slots which is output from the weighted adding circuit 204 by the phase rotation correction value Δθsymbol of each symbol in the multiplier 206 is used.

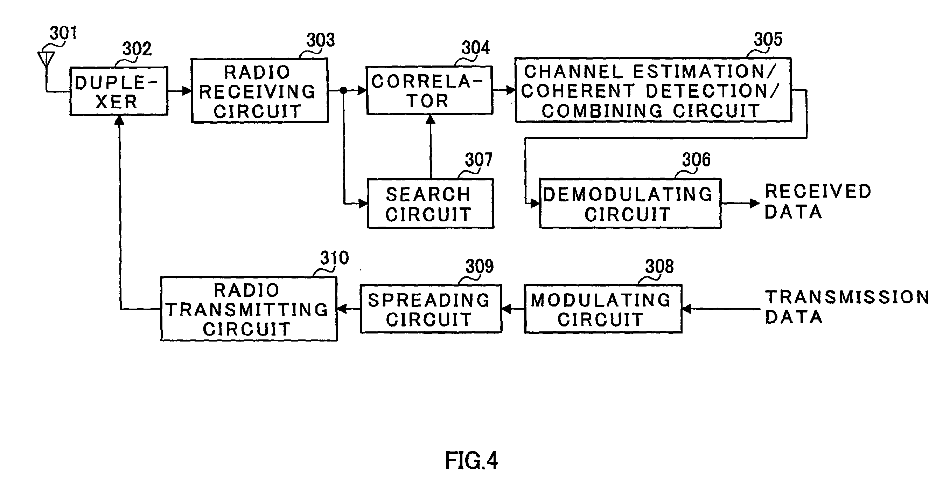

FIG. 4 is a block diagram showing a configuration of a communication terminal which carries out radio communication with a base station equipped with the channel estimating apparatus according to the first embodiment of the present invention. In the communication terminal shown in FIG. 4, although a description will be made to the case in which only one path for carrying out the RAKE combining is included, it is applicable to other cases in which two or more paths are included for carrying out the RAKE combining.

The signal transmitted from the base station as the communicating partner is received by a radio receiving circuit 303 through an antenna 301 and a duplexer 302. In the radio receiving circuit 303, a predetermined radio receiving processing is made on the received signal, and the signal after the radio receiving processing is output to both correlator 304 and search circuit 307.

In the correlator 304, a despreading processing is performed on the radio receiving processed signal using the spreading code which has been used in the spread modulation processing in the base station as the communicating partner, and the signal is output to a channel estimation/coherent detection/combining circuit 305. The correlator 304 carries out a despreading processing based on the timing information from the search circuit 307. In the channel estimation/coherent detection/combining circuit 305, a channel estimation is preformed using a pilot portion (known signal) of the signal after the radio receiving processing to obtain a channel estimation value, and a coherent detection is performed by multiplying the data portion of the signal after the radio receiving processing by the channel estimation value. Further, in the channel estimation/coherent detection/combining circuit 305, a RAKE combining is executed using the signal after the coherent detection.

The signal after the RAKE combining is output to a demodulating circuit 306. In the demodulating circuit 306, a demodulating processing is carried out on the signal after the RAKE combining to obtain a received data.

After being subjected to a modulation processing in a modulating circuit 308, the transmission data is output to a spreading circuit 309. In the spreading circuit 309, a spread modulation processing is made on the data after the modulation processing using a predetermined spreading code, and the data after the spread modulation processing is output to a radio transmitting circuit 310. In the radio transmitting circuit 310, a predetermined radio transmitting processing is made on the data after the spread modulation processing. The signal which has been subjected to the radio transmitting processing is transmitted to the base station as the communicating partner via the antenna 301 and duplexer 302.

A digital radio communication system based on the CDMA system is constituted of the base station shown in FIG. 2 and the communication terminal shown in FIG. 4 as described above, and a radio communication is carried out by the base station shown in FIG.2 and the communication terminal shown in FIG. 4.

Next, an operational description of the base station provided by a channel estimating apparatus having the aforementioned configuration is given below.

In the base station, an uplink signal from the communication terminal is received, and a despreading processing is carried out on the received signal by a correlator. The despread signal is output to both frequency offset detecting circuit 2051 and fD detecting circuit 2052 of the phase rotation detecting circuit 205. In the frequency offset detecting circuit 2051 and fD detecting circuit 2052, respectively, a frequency offset component and an fD are detected separately.

Herein, as a method for separating and detecting the frequency offset component and the fading fluctuation component, for instance, there is a method of averaging taking into consideration the ± sign and the direction of the phase rotation when calculating an inner product and do averaging based on a channel estimation value after a normalization of each slot. Specifically, by taking the averaging over a relatively long averaging length, removing the component of the phase rotation due to the fD which varies frequently and the phase rotation can be detected based on the frequency offset only. Moreover, by averaging the absolute values of the values obtained by subtracting the phase rotation which is obtained based on the frequency offset only from each inner product value (value with symbol of the rotation direction), an average value of phase rotation based on the fD only can be obtained. However, in the present invention, the method for separating and detecting the frequency offset component and the fading fluctuation component is not limited to the foregoing example; there is no problem when another method is applied.

The phase rotation due to the frequency offset can be regarded as to be constant relative to the measuring time (several seconds order). Since the phase rotation due to the fading fluctuation is not constant, even in a short interval, in both of the rotation amount and the rotation direction, the difference between the detected value averaged over a long period of time and the instantaneous amount of the phase rotation is large, hence, the channel estimation accuracy may be adversely deteriorated when a phase rotation correction is made based on an incorrect detected value.

On the other hand, in case when the Doppler frequency is high, since the influence that the phase rotation due to the fading fluctuation gives to the in-phase addition cannot be ignored, it is considered rather better to correct not only the frequency offset but also the phase rotation due to the fading fluctuation. In any case, the correction of the phase rotation due to the fading fluctuation depends on the detection accuracy in a short period of time.

As described above, by separately detecting the phase rotation due to the frequency offset and the phase rotation due to the fD, and by reflecting both amounts of phase rotation to the channel estimation, it is possible to prevent the channel estimation from being deteriorated when the difference between an averaged value which is detected over a long period of time and an amount of instantaneous phase rotation is large, and it is also possible to reduce the influence of the phase rotation due to the fading to the in-phase addition.

The frequency offset component obtained by the frequency offset detecting circuit 2051 is output to the per-symbol phase rotation correcting circuits 209 and 210 and the per-slot phase rotation correcting circuit 207. That is to say, in the present invention, the correction of each symbol as well as correction of each slot before weighting addition is used as a phase rotation correction. Accordingly, in the in-slot processing, the phase rotation is corrected as a symbol unit, in addition, the phase rotation is corrected as a slot unit (using also slots before and after the slot under consideration).

By carrying out the phase rotation correction in two steps as described above, i.e., first of all, by carrying out a correction as a symbol unit, a frequency offset component is removed from a channel estimation value of each symbol and the channel estimation accuracy of a slot unit by the in-phase addition is increased, and then, by removing the frequency offset component among the slots before and after the slot to be demodulated in the WMSA, the channel estimation accuracy by the weighting addition of the WMSA can be increased. As described above, since the phase rotation correction can be carried out in symbol level and slot level, separately, it is possible to obtain the channel estimation value with a higher accuracy.

Moreover, when carrying out the phase rotation correction of a symbol unit and the phase rotation correction of a slot unit as described above, there may be two cases of the unit on which the channel estimation is to be made, i.e., a case of the symbol unit or a case of the slot unit. When the channel estimation value has been calculated of a symbol unit, it is necessary to carry out a symbol adjustment when carrying out channel estimation.

In the per-symbol phase rotation correcting circuits 209 and 210 and the per-slot phase rotation correcting circuit 207, phase rotation correction values are obtained by carrying out the following specific calculations, respectively.

A correlation output after being adjusted to a same phase by eliminating data modulation component when multiplied by the PL pattern of the pilot portion is expressed as:

$$pl(m)=pl.i+jpl.q \quad (m=0\text{-}5\text{:}m \text{ represents a symbol}) \qquad \text{FORMULA(1)}$$

A phase rotation correction value of a symbol unit which is calculated by the per-symbol phase rotation correcting circuits 209 and 210 is given by;

$$ej(\Delta\theta symb*m)=ad\_symb.i(m)+j\cdot ad\_symb.q(m) \qquad \text{FORMULA(2)}$$

A phase rotation correction value of a slot unit which is calculated by the per-slot phase rotation correcting circuit 207, is given by:

$$ej(\Delta\theta slot * t)=ad\_slot.i(t)+j\cdot ad\_slot.q(t)$$

(t=-2,-1,0,+1,+2) FORMULA(3)

The phase rotation correction value $\Delta\theta$symbol of the per-symbol phase rotation correcting circuit 210 is output to the multiplier 201 by which a despreading signal is multiplied before PL pattern multiplication. Owing to this, the phase rotation is corrected as a symbol unit before obtaining the correlation with the PL pattern.

The correlation output pl(m) which is obtained by multiplying the despread signal of the pilot portion of which phase rotation has been corrected as a symbol unit by the PL pattern is output to the coherent adding circuit 203. In the coherent adding circuit 203, an in-phase addition is performed yielding:

$$ch(t,0)=\Sigma pl(m)\cdot ej(\Delta\theta symb * m),$$ FORMULA(4)

where m=0-5. The ch(t,m) represents a channel estimation value of at-slot and m-symbol, respectively. The channel estimation value is the value before weighting addition (WMSA: Weighted Multi-Symbol Averaging).

Then, the channel estimation value after in-phase addition is output to the weighted adding circuit 204. In the weighted adding circuit 204, a WMSA is made using a weight factor $\alpha$ which has been calculated by the weight factor calculating circuit 208 and a phase rotation correction value $\Delta\theta$slot which is an output of the per-slot phase rotation correcting circuit 207. In the correction of the WMSA, a correction of the $\Delta\theta$slot is made using a slot which is to be demodulated as the center.

Assuming that a channel estimation value of the m-th symbol and n-th slot of the first branch is expressed by the FORMULA(5)given below:

$$\hat{h}_t(n,m),$$ FORMULA(5)

then, the channel estimation value of each slot after in-phase addition becomes as shown in FORMULA(6); further, by using the channel estimation values of a plurality of slots prior thereto and thereafter, the channel estimation value becomes as expressed in FORMULA(7).

$$\hat{\xi}_l(n) = \frac{1}{N_\rho} \sum_{m=0}^{N_\rho-1} \hat{h}_l(n,m)$$ ...FORMULA( 6 )

$$\hat{\xi}_l(n) = \sum_{i=-K+1}^{K} \alpha_i \hat{\xi}_l(n+i)$$ ...FORMULA( 7 )

where $\alpha i(=<1)$ represents a weight factor.

The WMSA technique is disclosed in THE INSTITUTE OF ELECTRONICS. TECHNICAL REPORT OF IEICE (RCS97-163, 1997-11); Characteristics of DS/CDMA Weighted Multi-Symbol Averaging (WMSA) Pilot Channel"; Abeta, Ando, SawahashiandAdachi, entire content thereof is expressly incorporated by reference herein.

Applying this technique when calculating a channel estimation value of the foremost symbol of a demodulating slot by carrying out the WMSA according to the phase rotation correction of a slot unit, the calculation is carried out using the FORMULA:

$$CH(t,0)=\Sigma W(t)\cdot ch(t,0)\cdot ej(\Delta\theta slot * t),$$ FORMULA(8)

where number of slots is 5, i.e., t=-2, -1, 0, +1, +2; but the number of the slots is not particularly limited, W(t) indicates a weight factor of the WMSA, and CH(t,m) indicates a channel estimation value of a t-slot and m-symbol, respectively. The channel estimation value is a value taken after WMSA.

**EP 1 209 871 A1**

Accordingly, the obtained channel estimation value of each symbol is expressed by:

$$CH(t,m)=CH(t,0)\cdot ej(\Delta\theta symb*m)$$    FORMULA(9)

In the foregoing calculation of the channel estimation value, a calculation of the WMSA after inter-slots correction is made; it is adapted in the foregoing FORMULA(4) that the correction of estimation value is carried out while adjusting the head of a slot. Accordingly, when the WMSA is made as it is, the obtained channel estimation value is equivalent to the value of the head of the slot. When carrying out a coherent detection by calculating the channel estimation value of each symbol, the channel estimation value of each symbol is obtained by multiplying the symbols from the symbol next to the first symbol as they are by the phase rotation correction value $\Delta\theta symbol$. That is to say, when calculating the channel estimation value of each symbol, the output of the weighted adding circuit 204 is multiplied by the phase rotation correction value $\Delta\theta symbol$ which has obtained by the per-symbol phase rotation correcting circuit 209 in the multiplier 206 (symbol-unit processing).

However, since it is preferable to use a channel estimation value of the slot center (or the center of the pilot symbol section) when carrying out a coherent detection using a channel estimation value of a slot unit, it is also preferred to carry out the coherent detection using a value which is the value after WMSA multiplied by approximately $4*\Delta\theta symbol$ or so (when the pilot symbol length of which slot length is 10).

Further, it is appropriately changeable whether a channel estimation value of the average of slots or a channel estimation value of a symbol unit is used. When a channel estimation value of a symbol unit is used, an identification indicated that the channel estimation value is of the symbol unit is input to the per-symbol phase rotation correcting circuit 209, and the per-symbol phase rotation correcting circuit 209 multiplies the output of the weighted adding circuit 204 by the phase rotation correction value $\Delta\theta symbol$ according to the identification. On the other hand, when a channel estimation value of the average of slots is used, according to the fact that the channel estimation value is of the average of slots, a processing is performed so as to adjust the channel estimation value to the slot median.

As described above, since the phase rotation of which state of changes is caused from the frequency offset and the phase rotation of which state of changes is caused from the fading fluctuation are corrected separately and both corrections are reflected to the channel estimation, the channel estimation accuracy can be improved without allowing the reception quality to be deteriorated.

Further, by carrying out the channel estimation in such manner that the phase rotation is corrected as a symbol unit (in-slots processing) before the in-phase addition of the despreading signal, further, the phase rotation is corrected as a slot unit (inter-slots processing) after the in-phase addition, the channel estimation accuracy can be improved more.

Furthermore, in the first embodiment, although a description has been made to the case when the channel estimation value of the average of slots and the channel estimation value of a symbol unit are obtained by carrying out both of the phase rotation correction of a symbol unit and the phase rotation correction of a slot unit, the present invention may be adapted such that the channel estimation value of the average of slots and the channel estimation value of a symbol unit are obtained by carrying out the phase rotation correction of a slot unit only.


(Second embodiment)

In a second embodiment, a description will be made to the case that a control of switching between the phase rotation correction of the frequency offset and the phase rotation correction of the fading fluctuation, and switching of the weight factors in the WMSA are made.

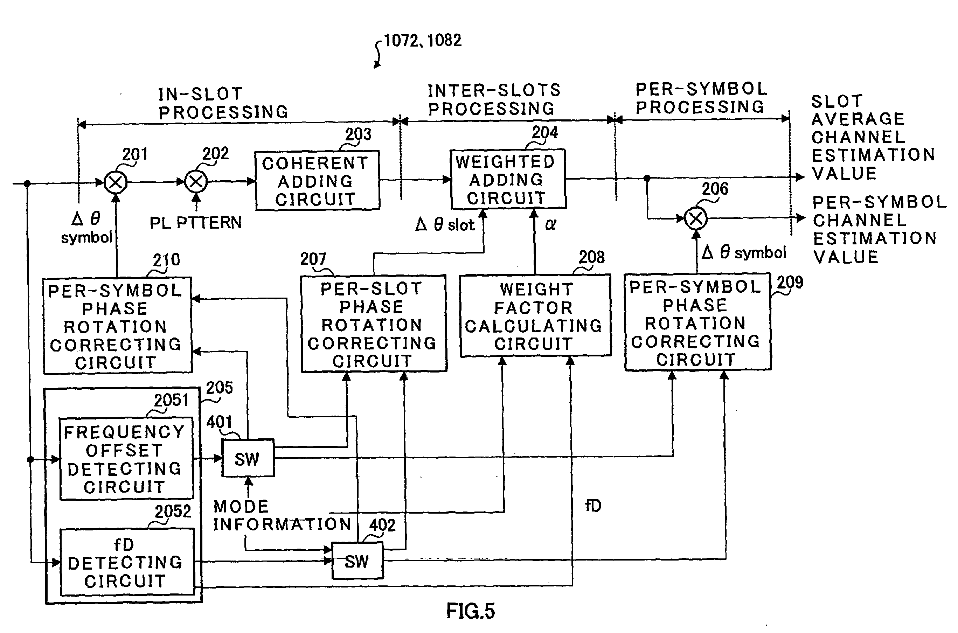

FIG. 5 is a block diagram showing a configuration of a channel estimating circuit according to the second embodiment of the present invention. In the channel estimating circuit shown in FIG. 5, the parts which are identical to those shown in FIG. 3 are given reference numerals similar to those in FIG.3 and their description thereof will be omitted.

A channel estimating circuit shown in FIG. 5, is provided by switches 401 and 402 that switches the output from a phase rotation detecting circuit 205. The switch 401 controls the output of frequency offset component detected by a frequency offset detecting circuit 2051 whereas the switch 402 controls the output of the detected fD value detected by fD detecting circuit 2052.

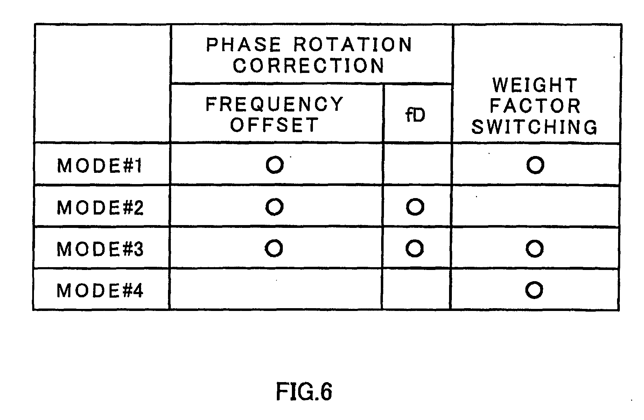

The components to be taken into consideration for phase rotation correction are the frequency offset and the fading fluctuation, as have been described in the first embodiment. Accordingly, as the modes to be switched, there are two modes, i.e., as a component of the phase rotation correction, the frequency offset only or a combination of the frequency offset and the fading fluctuation; and there are two methods for controlling the WMSA corresponding to the fading fluctuation. That is to say, as will be described bellow, the following four modes are considered (referring to FIG. 6).

Mode #1: The phase rotation correction takes into consideration the frequency offset only. Since the influence of the phase rotation due to fading fluctuation remains, it will be handled by the switching weight factors of the WMSA.

Mode #2: The phase rotation correction takes into consideration both frequency offset and fading fluctuation. However, taking into consideration the detection accuracy of the Doppler frequency and the speed of changes in the direction of the phase rotation in the fading fluctuation may be assumed, the correction by means of the fading fluctuation may be limited to either a case of high Doppler frequency or a case of low Doppler frequency. Further, when phase correction to the fading fluctuation is carried out, the switching of the weight factor for WMSA is not carried out, and the slot length to be averaged is of a fixed value.

Mode #3: The phase rotation correction takes into consideration both frequency offset and fading fluctuation. However, similar to mode #2, the correction which takes into consideration the fading fluctuation may be limited to either a case of high Doppler frequency or a case of lowDoppler frequency. In such case, the influence of the instantaneous phase rotation due to fading fluctuation may remain even after phase correction to fading fluctuation; it will be handled by switching weight factors of WMSA of the fading fluctuation.

Mode #4: The weight factor of the WMSA is switched based on Doppler frequency in the fading fluctuation, but the phase rotation correction with respect to the frequency offset is not carried out.

In the channel estimating circuit according to the second embodiment, by inputting and hence switching the mode information to switches 401 and 402, the phase rotation correction is performed based on the mode information.

For example, when the mode information is mode #1, the switch 401 is controlled so as to output the frequency offset component which is the output of the frequency offset detecting circuit 2051 to per-symbol phase rotation correcting circuits 209 and 210 and a per-slot phase rotation correcting circuit 207; whereas, the switch 402 is controlled so as not to output the detected fD value which is the output of the fD detecting circuit 2052. From the fD detecting circuit 2052, the fading fluctuation component (detected fD value) is output to a weight factor calculating circuit 208.

Owing to this, as the phase rotation correction, only the frequency offset is taken into consideration; the influence of the phase rotation due to fading fluctuation is suppressed by switching the weight factor of the WMSA corresponding to the Doppler frequency (detected fD value). That is to say, when the Doppler frequency is high (for example, fD=200Hz or more), the averaging time is shortened (number of slots before and after carrying out the averaging is reduced); when the Doppler frequency is low, the averaging time is elongated (number of slots before and after carrying out the averaging is increased).

When the mode information is mode #2, the switch 401 is controlled so as to output the frequency offset component which is the output of the frequency offset detecting circuit 2051 to per-symbol phase rotation correcting circuits 209 and 210 and a per-slot phase rotation correcting circuit 207; whereas, the switch 402 is controlled so as to output the detected fD value which is the output from the fD detecting circuit 2052 to the per-symbol phase rotation correcting circuits 209 and 210 and to the per-slot phase rotation correcting circuit207. From the fD detecting circuit 2052, the fading fluctuation component (detected fD value) is output to a weight factor calculating circuit 208.

Owing to this, the phase rotation correction takes into consideration both frequency offset and fading fluctuation. In this case, it may be controlled so as to output the detected fD value which is the output of the fD detecting circuit 2052 only when the Doppler frequency detected by the fD detecting circuit 2052 is high, or contrarily, it may be limited controlled according to conditions such as, only when the Doppler frequency is low, the detected fD value is output, etc. In this case, the weight factor calculating circuit 208 does not switch the weight factor of the WMSA based on the mode information, and the slot length to be averaged is of fixed value.

When the mode information is mode #3, the switch 401 is controlled so as to output the frequency offset component which is the output of the frequency offset detecting circuit 2051 to per-symbol phase rotation correcting circuits 209 and 210 and a per-slot phase rotation correcting circuit 207; whereas, the switch 402 is controlled so as to output the detected fD value which is the output from the fD detecting circuit 2052 to the per-symbol phase rotation correcting circuits 209 and 210 and to the per-slot phase rotation correcting circuit 207. From the fD detecting circuit 2052, the fading fluctuation component (detected fD value) is output to a weight factor calculating circuit 208.

Owing to this, the phase rotation correction takes into consideration both frequency offset and fading fluctuation. Similar to mode #2, it may be controlled so that the switch 402 is turned ON/OFF according to the conditions of the Doppler frequency detected by the fD detecting circuit 2052. Additionally, the influence of the phase rotation due to the fading fluctuation is suppressed by switching the weight factor of the WMSA. That is to say, when the Doppler frequency is high (for example, fD=200Hz or more), the averaging time is shortened (number of slots before and after carrying out the averaging is reduced); when the Doppler frequency is low, the averaging time is elongated (number of slots before and after carrying out the averaging is increased).

When the mode information is mode #4, the switch 401 is controlled so as not to output the frequency offset component which is the output of the frequency offset detecting circuit 2051 to per-symbol phase rotation correcting circuits 209 or 210 or a per-slot phase rotation correcting circuit 207; whereas, the switch 402 is also controlled so as not to output the detected fD value which is the output of the fD detecting circuit 2052. From the fD detecting circuit 2052, the fading fluctuation component (detected fD value) is output to the weight factor calculating circuit 208.

Owing to this, the influence of the phase rotation due to the fading fluctuation is suppressed by switching the weight factor of the WMSA. That is to say, when the Doppler frequency is high (for example, fD=200Hz or more), the averaging time is shortened (number of slots before and after carrying out the averaging is reduced); when the Doppler frequency is low, the averaging time is elongated (number of slots before and after carrying out the averaging is increased).

As described above, by appropriately switching the mode for switching the phase rotation correction and the WMSA, it is possible to carry out appropriate channel estimation according to the status of the channel. Particularly, regarding mode #2 and mode #3, when the phase rotation due to the fading fluctuation is larger than the phase rotation component due to the frequency offset, that is, the case of a high Doppler frequency, since the influence that the phase rotation due to the fading gives to the channel estimation accuracy as a slot unit and the channel estimation accuracy obtained by the WMSA is large, it is conceivable that a better channel estimation value may be obtained by carrying out correction including not only the frequency offset but also the phase rotation due to the fading.

The foregoing first and second embodiments can be implemented being appropriately combined.

Furtherer, the present invention is not limited to the foregoing embodiments, but may be implemented being variously modified.

The channel estimating apparatus of the present invention has a configuration that comprises a phase rotation detecting section that separately detects a frequency offset component and a fading fluctuation component of a phase rotation from a known signal included in a received signal and a channel estimating section that carries out channel estimation using said frequency offset component and said fading fluctuation component of the phase rotation.

According to the configuration, it is enabled to increase the channel estimation accuracy without allowing the reception quality to be deteriorated.

The channel estimating apparatus of the present invention has a configuration that comprises a first phase rotation correcting section that carries out, referring to the foregoing configuration, a phase rotation correction of a slot unit using the frequency offset component of the phase rotation.

The channel estimating apparatus of the present invention has a configuration that comprises a second phase rotation correcting section that carries out, referring to the foregoing configuration, a phase rotation correction of a symbol unit using the frequency offset component of the phase rotation.

According to these configurations, since it is possible to carry out the phase rotation corrections in symbol level and/or in slot level, separately, it is also possible to carry out the channel estimation with better accuracy.

The channel estimating apparatus of the present invention has a configuration that comprises a weight factor calculating section that calculates, referring to the foregoing configuration, a weight factor which is used to carry out a weight addition among the slots in a channel estimation using a fading fluctuation component of the phase rotation.

According to the configuration, it is possible to increase the channel estimation accuracy using channel estimation values of a plurality of slots that are supposed to have a high fading correlation.

The channel estimating apparatus of the present invention has a configuration that calculates a channel estimation value of each symbol by multiplying an output after weighting addition by phase rotation correction value of a symbol unit calculated by said second phase rotation correcting section when calculating channel estimation value of each symbol in the foregoing configuration.

The channel estimating apparatus of the present invention has a configuration that carries out a processing on an output after weighting addition so as to adjust the channel estimation value to a slot median when calculating a channel estimation value of the average of slots in the foregoing configuration.

According to these configurations, the channel estimation value can be obtained accurately either in a symbol unit or in an average of slots.

The base station apparatus of the present invention is characterized by comprising a channel estimating apparatus having the foregoing configurations. Owing to this, the base station apparatus can carry out high accuracy channel estimation and provide a high receiving performance.

The channel estimating method of the present invention comprises a phase rotation detecting step that separately detects a frequency offset component and a fading fluctuation component of a phase rotation from a known signal included in a received signal and a channel estimating step that carries out channel estimation using the frequency offset component and the fading fluctuation component of said phase rotation.

According to this method, it is possible to increase the channel estimation accuracy without allowing the reception quality to be deteriorated.

The channel estimating method of the present invention comprises, referring to the foregoing method, a first phase rotation correcting step that carries out a phase rotation correction of a symbol unit using a frequency offset component of the phase rotation and a second phase rotation correcting step that carries out a phase rotation correction of a slot unit using said frequency offset component of the phase rotation.

According to the method, since it is possible to carry out the phase rotation correction in symbol level and in slot level, separately, it is also possible to carry out the channel estimation with better accuracy.

The channel estimating method of the present invention comprises a weight factor calculating step, referring to the foregoing method, that calculates a weight factor which is used to carry out weight addition among the slots in the received signal using the fading fluctuation component of the phase rotation.

According to this method, it is possible to increase the channel estimation accuracy using channel estimation values of a plurality of slots that are supposed to have a high fading correlation.

As described above, according to the present invention, since the frequency offset component and the fading fluctuation component of the phase rotation are detected separately from a known signal included in the received signal, and the channel estimation is performed using the frequency offset component and the fading fluctuation component of the phase rotation, it is possible to increase the channel estimation accuracy without allowing the reception quality to be deteriorated.

This application is based on the Japanese Patent Application No.2000-214434 filed on July 14, 2000, entire content thereof is expressly incorporated by reference herein.

Industrial Applicability

The present invention is applicable to a channel estimating apparatus and a channel estimating method used in a digital radio communication system, particularly in the CDMA system.

**Claims**

1. A channel estimating apparatus comprising:

   phase rotation detecting means for separately detecting a frequency offset component and a fading fluctuation component of a phase rotation from a known signal included in a received signal; and
   channel estimating means for carrying out channel estimation using said frequency offset component and said fading fluctuation component of the phase rotation.

2. The channel estimating apparatus according to claim 1, further comprising a first phase rotation correcting means for carrying out a phase rotation correction of a slot unit using the frequency offset component of the phase rotation.

3. The channel estimating apparatus according to claim 1, further comprising a second phase rotation correcting means for carrying out a phase rotation correction of a symbol unit using the frequency offset component of the phase rotation.

4. The channel estimating apparatus according to claim 1, further comprising weight factor calculating means for calculating a weight factor which is used to carry out a weighting addition among the slots in a channel estimation using the fading fluctuation component of the phase rotation.

5. The channel estimating apparatus according to claim 4, said channel estimating apparatus calculates a channel estimation value of each symbol by multiplying the output after weighting addition by the phase rotation correction value of a symbol unit calculated by said second phase rotation correcting means when calculating channel estimation value of each symbol.

6. The channel estimating apparatus according to claim 4, said channel estimating apparatus carries out a processing on the output after weighting addition to adjust the channel estimation value to a slot median when calculating a channel estimation value as the average of slots.

7. A base station apparatus comprising a channel estimating apparatus, said channel estimating apparatus comprising:

   phase rotation detecting means for separately detecting a frequency offset component and a fading fluctuation component of a phase rotation from a known signal included in a received signal; and
   channel estimating means for carrying out channel estimation using said frequency offset component and said fading fluctuation component of the phase rotation.

8. A channel estimating method comprising:

   a phase rotation detecting step of separately detecting a frequency offset component and a fading fluctuation component of a phase rotation from a known signal included in a received signal; and
carrying out channel estimation using said frequency offset component and said fading fluctuation component of the phase rotation.

9.   The channel estimating method according to claim 8, further comprising:

a first phase rotation correction step of carrying out a phase rotation correction of a symbol unit using said frequency offset component of the phase rotation; and
a second phase rotation correction step of carrying out a phase rotation correction of a slot unit using said frequency offset component of the phase rotation.

10.   The channel estimating method according to claim 8, further comprising a weight factor calculating step of calculating a weight factor which is used to carry out a weight addition among the slots in the received signal using the fading fluctuation component of the phase rotation.

FIG.1

FIG.2

EP 1 209 871 A1

FIG.3

EP 1 209 871 A1

```
301          302              303                    304                          305
 Y                       ┌─────────┐           ┌──────────┐    ┌──────────────────────────┐
     ┌─────────┐        │  RADIO   │           │ CORRELA- │    │ CHANNEL ESTIMATION/      │
─────│ DUPLE-  │───────▶│RECEIVING │──●───────▶│   TOR    │───▶│ COHERENT DETECTION/      │──┐
     │  XER    │        │ CIRCUIT  │   │       └──────────┘    │ COMBINING CIRCUIT        │  │
     └─────────┘        └──────────┘   │            ▲          └──────────────────────────┘  │
         ▲                             │            │                                        │
         │                             │        307 │                          306           │
         │                             │       ┌──────────┐    ┌──────────────┐              │
         │                             └──────▶│ SEARCH   │    │ DEMODULATING │   RECEIVED    │
         │                                     │ CIRCUIT  │    │   CIRCUIT    │──▶  DATA       │
         │                                     └──────────┘    └──────────────┘              │
         │                                                            ▲                       │
         │                                                            └───────────────────────┘
         │        310                309              308
         │   ┌──────────────┐   ┌──────────┐    ┌──────────────┐
         │   │    RADIO     │   │SPREADING │    │  MODULATING  │   TRANSMISSION
         └───│ TRANSMITTING │◀──│ CIRCUIT  │◀───│   CIRCUIT    │◀─   DATA
             │   CIRCUIT    │   └──────────┘    └──────────────┘
             └──────────────┘
```

FIG.4

EP 1 209 871 A1

1072, 1082

IN-SLOT PROCESSING | INTER-SLOTS PROCESSING | PER-SYMBOL PROCESSING

SLOT AVERAGE CHANNEL ESTIMATION VALUE

PER-SYMBOL CHANNEL ESTIMATION VALUE

201

202

203 COHERENT ADDING CIRCUIT

204 WEIGHTED ADDING CIRCUIT

206

$\Delta \theta$ symbol

PL PTTERN

$\Delta \theta$ slot

$\alpha$

$\Delta \theta$ symbol

210 PER-SYMBOL PHASE ROTATION CORRECTING CIRCUIT

207 PER-SLOT PHASE ROTATION CORRECTING CIRCUIT

208 WEIGHT FACTOR CALCULATING CIRCUIT

209 PER-SYMBOL PHASE ROTATION CORRECTING CIRCUIT

205

2051 FREQUENCY OFFSET DETECTING CIRCUIT

401 SW

MODE INFORMATION

2052 fD DETECTING CIRCUIT

402 SW

fD

FIG.5

| | PHASE ROTATION CORRECTION | | WEIGHT FACTOR SWITCHING |
| | FREQUENCY OFFSET | fD | |
|---|---|---|---|
| MODE#1 | O | | O |
| MODE#2 | O | O | |
| MODE#3 | O | O | O |
| MODE#4 | | | O |

FIG.6

**EP 1 209 871 A1**

<table>
<tr><td colspan="2" align="center">INTERNATIONAL SEARCH REPORT</td><td>International application No.</td></tr>
<tr><td colspan="2"></td><td>PCT/JP01/05567</td></tr>
</table>

A. CLASSIFICATION OF SUBJECT MATTER
Int.Cl$^7$  H04L 27/22, H04J 13/04, H04B 7/26

According to International Patent Classification (IPC) or to both national classification and IPC

B. FIELDS SEARCHED

Minimum documentation searched (classification system followed by classification symbols)
Int.Cl$^7$  H04L 27/22, H04J 13/04, H04B 7/26

Documentation searched other than minimum documentation to the extent that such documents are included in the fields searched
Jitsuyo Shinan Koho       1926-2001    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2001-77744 A (Fujitsu Limited), 23 March, 2001 (23.03.01), Figs. 2, 3; columns 49, 53, 56   (Family: none) | 1,4,7,8 |
| Y | JP 2000-78111 A (Fujitsu Limited), 14 March, 2000 (14.03.00), column 66   (Family: none) | 1-10 |
| Y | JP 6-30070 A (Matsushita Electric Ind. Co., Ltd.), 04 February, 1994 (04.02.94), column 5   (Family: none) | 1-10 |
| Y | JP 11-55342 A (Hitachi, Ltd.), 26 February, 1999 (26.02.99), columns 39, 71   (Family: none) | 1-10 |
| Y | JP 2000-138721 A (Matsushita Electric Ind. Co., Ltd.), 16 May, 2000 (16.05.00), Fig. 7; columns 127, 138 to 151 & EP 1028553 A | 5 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 July, 2001 (18.07.01) | 31 July, 2001 (31.07.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP01/05567 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-78111 A (Fujitsu Limited), 14 March, 2000 (14.03.00), column 33   (Family: none) | 6 |
| A | JP 2000-4212 A (Matsushita Electric Ind. Co., Ltd.), 07 January, 2000 (07.01.00), Fig. 1   (Family: none) | 1-10 |
| A | Tadayuki ABETA et al., "DS-CDMA Tekiou Fukusuu Symbol Kasamitsuke Heikinka Pilot Channel Densouro Suitei Houshiki no Tokusei", Denshi Joho Tsushin Gakkai Gijutsu Kenkyu Hokoku, (1998), Vol.98, No.21, (RCS98 11-23), pages 67 to 74 | 1-10 |

Form PCT/ISA/210 (continuation of second sheet) (July 1992)